# EUROPEAN PATENT SPECIFICATION

(11) **EP 1 598 587 B1**
(45) Date of publication and mention of the grant of the patent: **27.07.2011**
(21) Application number: 05010348.0
(22) Date of filing: 12.05.2005
(51) Int. Cl.: F16L 27/108

(54) **Duct connection member and duct connection structure using the same**
Leitungsverbindungselement und Leitungsverbindungsstruktur mit diesem Leitungsverbindungselement
Élément de connection de tube et sa structure

(30) Priority: 19.05.2004 JP 2004149711
(43) Date of publication of application: 23.11.2005
(73) Proprietor: Toyota Boshoku Kabushiki Kaisya, Kariya-shi, Aichi-ken, 448-8651 (JP)
(72) Inventor: Matsushita, Yuushi, Kariya-shi Aichi-ken, 448-8651 (JP)
(74) Representative: TBK

(56) References cited:
- BE-A1- 878 181
- DE-A1- 4 003 283
- FR-A- 1 128 607
- FR-A- 2 644 871
- GB-A- 702 989
- US-A- 3 114 568

## Description

### BACKGROUND OF THE INVENTION

### 1. Field of the Invention

The present invention relates to a duct connection member and a duct connection structure using the same. More specifically, the present invention relates to a duct connection member and a duct connection structure that can adequately absorb longitudinal and transverse direction misalignment of connected ducts.

### 2. Description of the Related Art

Duct connection members are known for vehicle-use that are configured from, for example, an elastic member that connects respective opening ends of a first duct and a second duct (refer to Patent Document 1 and Patent Document 2 detailed below).

Patent Document 1 discloses a duct connection member including a first coupling member that fits on an opening end of a first duct, a second coupling member that fits on an opening end of a second duct, and a connecting body that connects the first and the second coupling members. A bellows portion is formed in the connecting body.

In the duct connection member disclosed in Patent Document 1, the bellows portion formed in the connecting body enables vibration in the axial direction of the ducts, namely, longitudinal direction misalignment, to be absorbed. However, it is difficult with this technology to adequately absorb vibration in the direction orthogonal to the axial direction of the ducts, namely, the transverse misalignment.

Moreover, with the duct connection member disclosed in Patent Document 1, when the first and the second coupling members are fixed to the first and the second ducts, initially, the first and the second coupling members are fitted to the first and the second ducts. Then, in a following process, it is necessary to perform a clamp fixing operation in which respective clamps are fitted around external peripheries of the first and the second coupling members, and then fastened using screws, or the like.

Further, a duct connection member is disclosed in Patent Document 2 that includes a first coupling member fitted to an opening end of a first duct, a second coupling member fitted to an opening end of a second duct, and a connecting body (a folded portion) that connects the first and second coupling members. The first and the second coupling members form a double tube structure.

However, with the duct connection member disclosed in Patent Document 2, the first and the second coupling members are formed with a double tube configuration, and as a result the first and the second ducts also form a double tube configuration in which they overlap with each other. Accordingly, it is difficult to adequately absorb misalignment in the transverse direction (refer to FIGS. 3 and 4 of Patent Document 2). In addition, since it is necessary to form the first and the second ducts with the double tube configuration, design freedom of the ducts is restricted, and the assembly operation is complicated.

Furthermore, with the duct connection member disclosed in Patent Document 2, a tip portion of one of the ducts faces the other duct with a tiny amount of clearance provided therebetween. Accordingly, it is difficult for longitudinal misalignment to be absorbed adequately.

Patent Document 1: Japanese Patent Laid-Open Publication No. Hei. 10-274364.

Patent Document 2: Japanese Patent Laid-Open Publication No. Hei. 9-113018.

Furthermore, GB 702 989 discloses a pipe coupling comprising a length of tubing of resilient flexible material, each end of which is adapted to accommodate one of the adjacent ends of two pipes to be coupled. One end portion 10a has an internal diameter substantially equal to the external diameter of the pipes 11, 12 to be coupled. In use the end portion 10a is fitted over the end of pipe 11 and is clamped firmly in position by means of a clip 13. The other end 10b of the rubber tubing has a funnel-shaped or flared mouth 10c adapted to receive one end of the second pipe 12. The central portion 10d of the tubing is of greater diameter than the end portions 10a, 10b the diameter increasing steadily from the end portion 10a to a maximum and then decreasing more rapidly to the portion 10b. Adjacent the part of maximum diameter an internal annular lip 10e provided on the rubber tubing extends with its inner surface forming a continuation of the inner periphery of the end portion 10b. The lip 10e tapers towards its end. The pipe 12 inserted in the flared mouth 10c of the coupling is inserted sufficiently far for its end flange 12a to extend a little past the end of the lip 10e. A space is formed between the inner periphery of the central portion 10d of the coupling and the adjacent surface of the lip 10e.

### SUMMARY OF THE INVENTION

The present invention has been conceived in light of the above described circumstances and it is an object thereof to provide a duct connection member and a duct connection structure utilizing the same that are capable of adequately absorbing longitudinal and transverse direction misalignment of connected ducts. Moreover, in addition to this object, the present invention also aims to provide a duct connection member and a duct connection structure using the same that make the duct fitting operation easier to perform.

The object is solved by the features defined in claim 1.

According to the duct connection member of the present invention, the first coupling portion is fitted to the external periphery surface of the opening end of the first duct, and the second coupling portion is fitted to the external periphery surface of the opening end of the second duct. Accordingly, the first duct and the second duct are connected in an effective air tight manner. Further, vibration in the axial direction of the connected ducts, namely, longitudinal direction misalignment of the ducts, is absorbed by, in the main, elastic deformation of the bulging portion in the axial direction. Moreover, vibration in the direction orthogonal to the axial direction of the connected ducts, namely, transverse direction misalignment of the ducts, is absorbed, in the main, by elastic deformation of the bulging portion in the direction orthogonal to the axial direction. Accordingly, it is possible to adequately absorb longitudinal and transverse direction misalignment of the connected ducts.

In addition, when the longitudinal section of the bulging portion has a U-shape, a structure can be provided that facilitates elastic deformation of the bulging portion. Accordingly, center misalignment of the ducts in the longitudinal and transverse directions can be favorably absorbed.

In addition, with the bulging portion provided with the internal periphery wall, the crest wall, and the external periphery wall, it is possible to provide a structure that still further facilitates elastic deformation of the bulging portion.

Moreover, with the ring-shaped member capable of expanding and contracting by elastic deformation provided at the external periphery surface of the one coupling portion among the first and the second coupling portions, it is possible to press fit the one coupling portion to the duct. Accordingly, the fitting operation is made easier to perform. In addition, it is possible to more strongly fix the one coupling portion to the duct, whereby it is possible to improve the air tightness of the connection area, and more effectively absorb longitudinal and transverse direction misalignment of the ducts.

Further, with the bulging portion provided at the external periphery side of the first coupling portion and not provided at the external periphery side of the second coupling portion, and the connecting body having the bulging portion and the connecting portion, the second coupling portion can be firmly fixed to the second duct using the clamp. Accordingly, it is possible to improve air tightness of the connection area still further, and reduce generation of vibration of the second duct.

Moreover, if the first duct is the outlet of the air cleaner and the second duct is the housing of the throttle, it is possible to connect the outlet of the air cleaner and the housing of the throttle in an effective air tight manner, and to effectively absorb misalignment thereof in the longitudinal and transverse directions.

According to the duct connection structure of the present invention, the first coupling portion is fitted to the external periphery surface of the opening end of the first duct and the second coupling portion is fitted to the external periphery surface of the opening end of the second duct. Accordingly, the first duct and the second duct are connected in an effective air tight manner. Moreover, vibration in the axial direction of the connected ducts, namely, longitudinal direction misalignment of the ducts, is absorbed by, in the main, elastic deformation of the bulging portion in the axial direction. Moreover, vibration in the direction orthogonal to the axial direction of the connected ducts, namely, transverse direction misalignment of the ducts, is absorbed, in the main, by elastic deformation of the bulging portion in the direction orthogonal to the axial direction. Accordingly, it is possible to adequately absorb longitudinal and transverse misalignment of the connected ducts.

### Exemplary Form of the Invention

### 1. Duct Connection Member

A duct connection member according to the present invention is configured from an elastic member that connects respective opening ends of a first duct and a second duct of a vehicle, which will be described later. This duct connection member includes a first coupling portion, a second coupling portion, and a connecting body, described hereinafter.

Note that, the vehicle may be, for example, an automobile, a truck, a fork lift, a shovel loader, or the like.

For the material of the duct connection member, for example, rubber (including elastomer), synthetic resin, or the like, may be used. However, given its superior elasticity, rubber is preferable. As the rubber, for example, epichlorohydrin rubber (ECO), nitrile-butadiene rubber (NBR), silicon rubber (Q), fluoro rubber (FKM), natural rubber (NR), styrene-butadiene rubber (SBR), butadiene rubber (BR), chloroprene rubber, (CR), or the like, may be adopted. In particular, if the above described first and second ducts are disposed within an engine room of the vehicle, it is preferable to use epichlorohydrin rubber (ECO), nitrile-butadiene rubber (NBR), silicon rubber (Q), fluoro rubber (FKM), or the like, since such materials are outstanding in terms of heat resistance, cold resistance, oil resistance and weatherability. Moreover, for the molding method of the duct connection member, it is possible to utilize, for example, injection molding, press molding, casting, or blow molding.

So long as the above mentioned "first duct" is a duct of a vehicle, it may be of any type, size, shape, or the like. The first duct may have a cross sectional shape that is any one of circular, oval, cornered, or irregular, or may combine two or more of these shapes. In addition, the external shape of the first duct may be any one of, for example, linear, curved or bent, or may combine two or more of these shapes. Further, the first duct may be a duct which is disposed in an engine room of a vehicle and which circulates air. This type of duct may be, for example, an air cleaner outlet, an air cleaner inlet, a housing of a throttle, a housing of a resonator, an air tube, or the like.

A protrusion that protrudes in a centrifugal direction may be provided, for example, at an external periphery surface of an opening end of the first duct. Accordingly, when the above described first coupling portion is fitted to the opening end of the first duct, the protrusion abuts firmly against the internal periphery surface of the first coupling portion, whereby air tightness is improved still further. Moreover, an abutting portion may be provided on the external periphery surface of the opening end of the first duct so as to regulate the axial direction fitting position of the first coupling portion by abutting against, for example, a tip portion of the first coupling portion, described hereinafter.

So long as the above mentioned "second duct" is a duct of a vehicle, it may be of any type, size, shape, or the like. The configuration of the above described first duct may be adopted for the second duct.

The first and the second ducts may be, for example, positioned such that the axes of the ducts are substantially aligned, and the respective openings of the ducts face each other with a predetermined distance of separation. In particular, this positional arrangement is desirable when the first duct is an outlet of an air cleaner and the second duct is a housing of a throttle, as will be explained with regard to an embodiment hereinafter. As the distance between the air cleaner and the throttle is made smaller, air flow characteristics are improved and it becomes easier to promote space saving.

So long as the above mentioned "first coupling portion" has a cylindrical shape that can be fitted to the external periphery surface of the opening end of the first duct, the first coupling portion may have any shape, size, or the like. Note that, the shape and size of the first coupling portion is selected to suitably accord with the shape, size, etc., of the opening end of the first duct. Further, the longitudinal sectional shape of the first coupling portion may be any one of circular, oval, cornered, or irregular, or may combine two or more of these shapes. Further, the first coupling portion may be fitted such that, for example, substantially all of a portion extending over the entire length of the first coupling portion in the axial direction is fitted to the external periphery surface of the first duct. Alternatively, the first coupling portion may be fitted such that only a predetermined portion in the axial direction thereof is fitted to the external periphery surface of the first duct.

Note that, the term a "base end portion" of the first coupling portion refers to an end portion in the axial direction thereof, this end portion being at the side of the first coupling portion that is adjacent to the second coupling portion, described hereinafter. Further, the term the "tip portion" of the first coupling portion refers to an end portion at the opposite end in the axial direction to the base end portion.

A protrusion that protrudes in a centripetal direction may be provided, for example, at an internal periphery surface of the first coupling portion. As a result, when the first coupling portion is fitted to the opening end of the first duct, the protrusion abuts firmly against the external periphery surface of the opening of the first duct, whereby it is possible to further improve air tightness. Moreover, an abutting portion may be provided at the external periphery surface of the first coupling portion that abuts with the tip portion of the first duct and regulates the fitting position of the first coupling portion in the axial direction. Further, an increased-diameter portion with a diameter that increases in a tip end direction may be provided, for example, at the tip portion of the first coupling portion. As a result, the first coupling portion can be easily press fitted to the first duct.

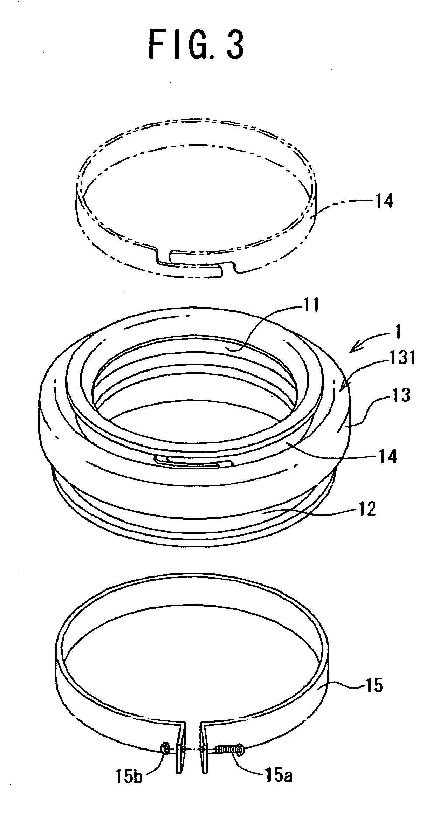

Note that, in the case that a bulging potion, described later, is provided at the external periphery side of the first coupling portion, it is possible to provide a ring-shaped member with an external periphery that can expand and contract by elastic deformation at the external periphery surface of the first coupling portion. This ring-shaped member may be made of any material, and have any structure or form. The ring-shaped member may be made, for example, of metal. Further, the ring-shaped member may be, for example, cut through at a predetermined position in the circumferential direction thereof (refer to FIG 3).

So long as the above mentioned "second coupling portion" has a cylindrical shape that can be fitted to the external periphery surface of the opening end of the second duct, the second coupling portion may have any shape, size, or the like. Note that, the shape and size of the second coupling portion is selected to suitably accord with the shape, size, etc., of the opening end of the second duct. The second coupling portion may adopt, for example, the configuration of the above described first coupling portion.

In addition, the second coupling portion is provided at a predetermined distance of separation in the axial direction from the first coupling portion. So long as it is possible to absorb center misalignment of the ducts in the longitudinal direction, the predetermined distance of separation may be of any size. However, the distance of separation is preferably 1 mm to 10 mm, more preferably 1.5 mm to 8 mm, and yet more preferably 2 mm to 6 mm.

The ring shape of the connecting body may be, for example, a cut-out section of one of a circular shape, an oval shape, a cornered shape, or an irregular shape, or may be a cut-out section of a combination of any two or more of the above shapes.

The connecting body has a bulging portion that is described hereinafter. Moreover, the connecting body normally includes a connecting portion described later.

From the viewpoint of ease of elastic deformation, it is preferable that the longitudinal section of the bulging portion has a U-shape. More specifically, it is preferable that the longitudinal section of the bulging portion has a U-shape with respect to the flow direction of air that passes through the inside of the duct connection member.

Note that, the term "U-shape" indicates any shape that is substantially U-shaped, for example, an V-shape, a square-edged U shape, or the like.

The longitudinal section shape of the internal periphery wall may be, for example, any one of a curved shape, a linear shape, a bent shape, or the like, or may be a combination of two or more of these shapes. Furthermore, the longitudinal section shape of the crest wall may be, for example, any one of a curved shape, a linear shape, a bent shape, or the like, or may be a combination of two or more of these shapes. Moreover, the longitudinal section shape of the external periphery wall may be, for example, any one of a curved shape, a linear shape, a bent shape, or the like, or may be a combination of two or more of these shapes. From the viewpoint of ease of elastic deformation, it is preferable that the internal periphery wall, the crest wall, and the external periphery wall are connected to form, for example, a rounded curve (a fillet strip-like portion).

Moreover, the thickness of the internal periphery wall and the crest wall is set to be slightly less than that of the external periphery wall. As a result, it is easier for the bulging portion to elastically deform. In particular, it is preferable to set the thickness of the internal periphery wall and the crest wall to be substantially half that of the external periphery wall. More specifically, it is preferable if the thickness of the internal periphery wall and the crest wall is, for example, 0.5 mm to 6 mm, more preferably 0.8 mm to 3 mm, and still more preferably 1 mm to 2 mm. Moreover, it is preferable if the thickness of the external periphery wall is, for example, 1 mm to 12 mm, more preferably 1.5 mm to 6 mm, and still more preferably 2 mm to 4 mm.

In addition, the internal periphery wall and the external periphery wall may face each other with a predetermined distance of separation (a maximum predetermined distance of separation). So long as it is possible to absorb center misalignment of the ducts in the transverse direction, this predetermined distance of separation may be of any size. However, the distance of separation is preferably 1 mm to 10 mm, more preferably 2 mm to 8 mm, and still more preferably 3 mm to 6 mm.

The bulging portion is provided at the external periphery side of the first coupling portion, but not at the external periphery side of the second coupling portion;

Note that the connecting body is provided with the bulging portion and a connecting portion with the L-shaped longitudinal section that connects the end portion of the bulging portion at an external periphery side thereof, and the base end portion of the second coupling portion.

Note that, the above term "L-shaped" indicates a shape that is substantially L-shaped, and may include, for example, a variety of L-like shapes.

### (2) Duct Connection Structure

The duct connection structure according to the present invention uses the above described duct connection member. The duct connection structure is characterised in that, the first coupling portion that configures part of the duct connection member is fitted to the external periphery surface of the opening end of the first duct, and the second coupling portion that configures part of the duct connection member is fitted to the external periphery surface of the opening end of the second duct wherein said first duct is an outlet of an air cleaner and said second duct is a housing of a throttle.

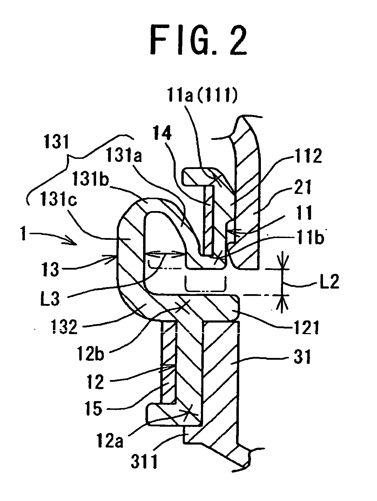

The duct connection structure is characterised in that: the bulging portion is provided at the external periphery side of the first coupling portion, but not at the external periphery side of the second coupling portion, and the connecting body is provided with the bulging portion and the connecting portion with the L-shaped longitudinal section that connects the end portion of the bulging portion at an external periphery side thereof, and the base end portion of the second coupling portion; the first coupling portion is press fitted to the external periphery surface of the opening end of the first duct by a ring-shaped member which is provided at the external periphery surface of the first coupling portion and which is capable of expanding and contracting by elastic deformation; and the second coupling portion is press fitted to the external periphery surface of the opening end of the second duct by a clamp that has been tightened (refer to FIG 2).

### BRIEF DESCRIPTION OF THE DRAWINGS

FIG. 1 is a longitudinal section view illustrating a connected state of a duct connection member according to a present embodiment;
FIG. 2 is an enlarged view of a main portion of FIG 1;
FIG. 3 is a perspective view of the duct connection member according to the present embodiment;
FIG. 4 is a longitudinal section view of a main portion of a duct connection member according to an explanatory example; and
FIG. 5 is a longitudinal section view of a main portion of a duct connection member according to yet another explanatory example.

### DETAILED DESCRIPTION OF THE PREFERRED EMBODIMENTS

Hereinafter, an embodiment that concretely embodies the present invention will be described with reference to the drawings.

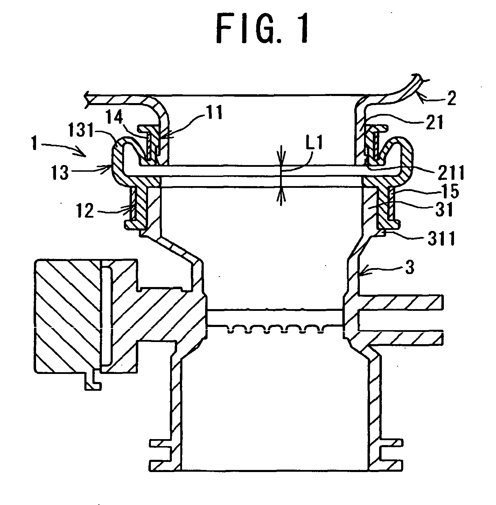

In the present embodiment, as shown in FIG 1, a "first duct" according to the present invention is illustrated as an outlet 21 of a cylinder of an air cleaner 2 disposed within an engine room (not shown) of an automobile. A "second duct" according to the present invention is illustrated as a cylindrical housing 31 of a throttle 3 disposed in the engine room of the vehicle. A "duct connection member" according to the present invention is shown as being a duct connection member 1 made of rubber (for example, ECO) that is connected to the outlet 21 and the housing 31.

The outlet 21 and the housing 21 have respective axes that are substantially in alignment. The outlet 21 and the housing 31 are disposed such that respective mouths thereof face each other with a predetermined distance of separation L1 (for example, around 6 mm). A periphery surface of the outlet 21 is provided with a ring-shaped protrusion 211 that protrudes in a centrifugal direction. Further, a ring-shaped abutting portion 311 protrudes in a centrifugal direction from an external periphery surface of the housing 31. This abutting portion 311 is abutted against a tip portion of a second coupling portion, described hereinafter, so as to position the second coupling portion in the axial direction.

### (1) Configuration of Duct Connection Member

The duct connection member 1 of the present embodiment, as shown in FIGS. 1 and 2, includes a first coupling portion 11, a second coupling portion 12, and a connecting body 13.

The first coupling portion 11 is a cylindrical portion that is fitted to the external periphery surface of the opening end of the outlet 21. The internal periphery diameter of the first coupling portion 11 is set to be slightly smaller than the external periphery diameter of the outlet 21. Moreover, an enlarged diameter portion 111 with a diameter that increases in a tip direction is provided at a tip portion 11a of the first coupling portion 11. A ring-shaped protrusion 112 is provided so as to protrude in a centripetal direction from an internal periphery surface of the first coupling portion 11. Further, a metal ring-shaped member 14 is fitted to an external periphery surface of the first coupling portion 11. This ring-shaped member 14, as shown in FIG 3, is cut through at a predetermined point in its circumferential direction, and thus the external periphery thereof can be expanded and contracted in an elastic manner.

The second coupling portion 12 is a cylindrical portion that is fitted to the external periphery surface of the opening end of the housing 31. An internal periphery diameter of the second coupling portion 12 is set to be slightly smaller than an external periphery diameter of the housing 31. A ring-shaped abutting portion 121 that protrudes in the centripetal direction is provided at a base end portion 12b of the second coupling portion 12. The second coupling portion 12 is positioned in the axial direction by abutting the abutting portion 121 against a tip portion of the housing 31. Further, a clamp 15 is fitted to an external periphery surface of the second coupling portion 12. A fitter uses a bolt 15a and a nut 15b to tighten the clamp 15.

The first coupling portion 11 and the second coupling portion 12 are disposed such that there is a predetermined distance L2 (for example, around 3 mm) in the axial direction between a base end portion 11b and the base end portion 12b.

The connecting body 13 is a portion that connects the respective base end portions 11b and 12b of the first coupling portion 11 and the second coupling portion 12. This connecting body 13, when viewed as a longitudinal cross section, has a half-ring shape that bulges outwards in the centrifugal direction. Further, the connecting body 13 is configured from a bulging portion 131 and a connecting portion 132.

The bulging portion 131 is provided at an external periphery side of the first coupling portion 11, and bulges outwards from the base end portion 11b of the first coupling portion 11 toward the tip portion 11a thereof. The longitudinal sectional shape of the bulging portion 131 forms an inverted U-shape with respect to the flow direction of air that passes through the inside of the duct connection member 1 (this direction corresponds to the direction from the outlet 21 toward the housing 31). Moreover, the bulging portion 131 is formed from an internal periphery wall 131a, a crest wall 131 b, and an external periphery wall 131 c.

The internal periphery wall 131a is contiguous with the base end portion 11b of the first coupling portion 11 and extends in the increasing diameter direction with a gently curved shape from the base end portion 11b toward the tip portion 11a. This internal periphery wall 131 a has a predetermined thickness (for example, around 1. 5 mm). The crest wall 131 b is contiguous with an end portion of the inner periphery wall 131a at the centrifugal side thereof, and extends with a curved shape in the centrifugal direction of the first coupling portion 11. This crest wall 131 b has a predetermined thickness (for example, about 1.5 mm). The external periphery wall 131c is contiguous with an end portion of the crest wall 131 b at the centrifugal side, and extends linearly toward the base end portion 11b from the tip portion 11a of the first coupling portion 11. This external wall 131c has a predetermined thickness (for example, about 3 mm). Note that, the internal periphery wall 131a, the crest wall 131 b, and the external periphery wall 131 c are connected together so as to form a rounded curve with an appropriate predetermined radius.

An internal periphery surface of the internal periphery wall 131a faces an internal periphery surface of the external periphery wall 131c with a maximum predetermined distance of separation L3 (for example, around 4 mm).

### (2) Assembly and Operation of the Duct Connection Member

Next, the assembly and operation of the duct connection member 1 with the above described configuration will be explained.

As shown in FIGS. 1 and 2, in a duct connection structure utilizing the duct connection member 1, the first coupling portion 11 is press fitted to the external periphery surface of the outlet 21 of the air cleaner 2. Note that, the first coupling portion 11 is strongly fixed to the outlet 21 by elastic deformation of the ring-shaped member 14. Further, the second coupling portion 12 of the duct connection member 1 is press fitted to the external periphery surface of the housing 31 of the throttle 3. Then, an operator tightens the clamp 15 such that the second coupling portion 12 is fixed extremely tightly to the housing 31.

When the engine is running, vibration in the axial direction of the outlet 21 and the housing 3, namely, longitudinal misalignment of the outlet 21 and the housing 31, is absorb, in the main, by expansion and contraction of the bulging portion 131 in the axial direction resulting from elastic deformation thereof. Moreover, vibration in the direction orthogonal to the axial direction of the outlet 21 and the housing 31, namely, transverse misalignment of the outlet 21 and the housing 31, is absorbed, in the main, by expansion and contraction of the bulging portion 131 in the direction orthogonal to the axial direction that results from elastic deformation thereof.

### (3) Effects of the Present Embodiment

According to the present embodiment, the duct connection member 1 includes the first coupling portion 11, the second coupling portion 12, and the connecting body 13 that is provided with the bulging portion 131 having the inverted generally U-shaped longitudinal section at the external periphery side of the first coupling portion 11. Accordingly, elastic deformation of the bulging portion 131 in the longitudinal and transverse directions enables longitudinal direction and transverse direction misalignment of the outlet 21 of the air cleaner 2 and the housing 31 of the throttle 3 to be adequately absorbed.

Further, with the present embodiment, the ring-shaped member 14 is provided around the external periphery surface of the first coupling portion 11 and is capable of expanding and contracting through elastic deformation. Accordingly, it is possible to attach (press fix) the first coupling portion 11 by press fitting it to the outlet 21 of the air cleaner 2. As a result, it is no longer necessary to perform the following process after attachment of the first coupling portion 11, namely, the clamp tightening operation, as is the case for related technology. Accordingly, the fitting operation of the coupling portion 11 is made easier to perform. Further, the first coupling portion 11 is strongly fixed to the outlet 21, whereby it is possible to both improve air tightness of the connecting area, and more effectively absorb center misalignment in the longitudinal and transverse directions of the outlet 21 of the air cleaner 2 and the housing 31 of the throttle 3.

In addition, with the present embodiment, the second coupling portion 12 is fixed extremely tightly to the housing 31 of the throttle 3 since the fitter tightens the clamp 15. Accordingly, it is possible to improve air tightness of the connection area, and reduce generation of vibration in the housing 31 of the throttle 3. As a result, the impact of vibrations on the other structural elements in the periphery of the throttle 3 can be kept to as small a level as possible.

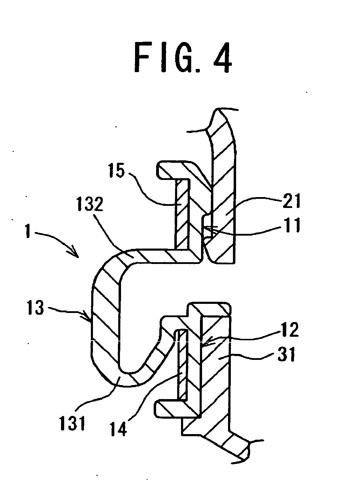

As an explanatory example, the bulging portion 131 is provided at the external periphery side of the second coupling portion 12 instead of being at the external periphery side of the first coupling portion 11, as shown in FIG. 4. In this case, the clamp 15 is used to fix the first coupling portion 11 to the outlet 21, and the ring-shaped member 14 is used to fix the second coupling portion 12 to the housing 31.

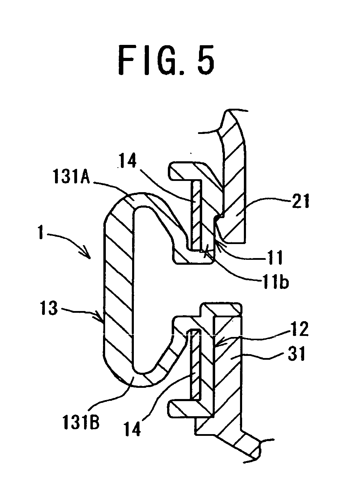

In addition, as a further explanatory example illustrated in FIG 5, a first bulging portion 131A may be provided at the external periphery side of the first coupling portion 11 and a second bulging portion 131 B may be provided at the external periphery side of the second coupling portion 12. With this configuration, the ring-shaped member 14 is used to fix the first coupling portion 11 and the second coupling portion 12 to the outlet 21 and the housing 31, respectively.

Further, in the present embodiment, substantially the entire length of the first coupling portion 11 in the axial direction is fitted to the external periphery surface of the outlet 21. However, the present invention is in no way limited to this configuration. For example, as shown in FIG 5, a predetermined portion of the first coupling portion 11 in the axial direction may be fitted to the external periphery surface of the outlet portion 21, with the base end portion 11b excluded. Further, with the present embodiment, substantially the entire length of the second coupling portion 12 in the axial direction may be fitted to the external periphery surface of the housing 31.

In addition, in the present embodiment, the duct connection member 1 is used to connect the outlet 21 of the air cleaner 2 and the housing 31 of the throttle 3. However, the present invention is not limited to this, and the duct connection member 1 may be used, for example, to connect an outlet of an air cleaner to an air tube, or to connect an outlet of a resonator to an air tube. Moreover, in the present embodiment, an example is illustrated in which the air cleaner 2 and the throttle 3 are disposed in an up-down arrangement. However, the present invention is not limited to this configuration, and, for example, an air cleaner and a throttle may be disposed in a left-right arrangement.

The present invention may be applied as a technology for connecting vehicular ducts. In particular, the present invention is suitable for application as a technology for connecting ducts which are disposed in a vehicle engine room and which circulate air.

## Claims

1. A vehicular duct connection member formed from an elastic member for connecting respective opening ends of a first duct (21) and a second duct (31), comprising:
a tubular first coupling portion (11) that is intended to be fitted to an external periphery surface of said opening end of said first duct (21); a tubular second coupling portion (12) which is intended to be fitted to an external periphery surface of said opening end of said second duct (31) and which is positioned with a predetermined axial direction distance (L2) of separation from said first coupling portion (11); and a connecting body (13) which connects respective base end portions (11b, 12b) of said first and second coupling portions (11, 12), and which has a ring shape around the longitudinal axis of the duct connection member, that ring shape bulging outwards in a centrifugal direction, said base end portions (11b, 12b) being at neighbouring sides of said first and second coupling portions (11, 12); and
said connecting body (13) has a bulging portion (131), which includes an internal periphery wall (131a) which is contiguous with said base end portion (11b) of said first coupling portion (11) and which extends in a centrifugal direction from said base end portion (11b) substantially towards a plane orthogonal to the longitudinal axis containing the tip portion (11a) of said coupling portion (11) such that the diameter of the internal periphery wall increases, a crest wall (131b) which is contiguous with an end portion of said internal periphery wall (131a) at a centrifugal side thereof and which extends in a centrifugal direction from said end portion, and an external periphery wall (131c) which is contiguous with an end portion of said crest wall (131b) at the centrifugal side and which extends from said end portion of said crest wall (131b) substantially towards a plane orthogonal to the longitudinal axis containing said base end portion (11b) of said first coupling portion (11), and
wherein a thickness of said internal periphery wall (131a) and said crest wall (131b) are set to be slightly less than a thickness of said external periphery wall (131c),
wherein said connecting body (13) is made of said bulging portion (131) and of a connecting portion (132) with an L-shaped longitudinal section that connects an end portion of said bulging portion (131) at an external periphery side thereof, to said base end portion (12b) of said second coupling portion (12), and
wherein an abutting portion (121) that protrudes in a centripetal direction and that is intended to abut with a tip portion of said second duct (31) is provided at said base end portion (12b) of said second coupling portion (12).

2. The duct connection member according to claim 1, wherein
a ring-shaped member (14) capable of expanding and contracting by elastic deformation is provided at an external periphery surface of said first coupling portion (11).

3. The duct connection structure using said duct connecting member according to claim 1 or 2,
**characterized in that**
said first coupling portion (11) is fitted to said external periphery surface of said opening end of said first duct (21), and said second coupling portion (12) is fitted to said external periphery surface of said opening end of said second duct (31), wherein
said first duct (21) is an outlet of an air cleaner, and said second duct (31) is a housing of a throttle.

## Patentansprüche

1. Für ein Fahrzeug vorgesehenes Kanalverbindungselement, das aus einem elastischen Element ausgebildet ist, zum Verbinden jeweiliger offener Enden eines ersten Kanals (21) und eines zweiten Kanals (31), mit:
einem röhrenartigen ersten Kupplungsabschnitt (11), der dazu gedacht ist, dass er an einer Außenumfangsfläche des offenen Endes des ersten Kanals (21) sitzt; einem röhrenartigen zweiten Kupplungsabschnitt (12), der dazu gedacht ist, dass er an einer Außenumfangsfläche des Öffnungsendes des zweiten Kanals (31) sitzt, und der mit einem vorbestimmten in der axialen Richtung vorgesehenen Trennungsabstand (L2) von dem ersten Kupplungsabschnitt (11) positioniert ist; und einem Verbindungskörper (13), der jeweilige Basisendabschnitte (11b, 12b) des ersten und des zweiten Kupplungsabschnittes (11, 12) verbindet und eine Ringform um die Längsachse des Kanalverbindungselementes hat, wobei die Ringform nach außen in einer Zentrifugalrichtung ausbaucht, wobei die Basisendabschnitte (11b, 12b) an benachbarten Seiten des ersten und zweiten Kupplungsabschnittes (11, 12) sind; und
wobei der Verbindungskörper (13) einen Ausbauchungsabschnitt (131) aufweist, der eine Innenumfangswand (131a) hat, die an den Basisendabschnitt (11b) des ersten Kupplungsabschnittes (11) angrenzt und die sich in einer Zentrifugalrichtung von dem Basisendabschnitt (11b) im Wesentlichen zu einer Ebene hin erstreckt, die senkrecht zu der Längsachse ist und den Endstückabschnitt (11a) des Kupplungsabschnittes (11) derart aufweist, dass der Durchmesser der Innenumfangswand zunimmt, eine Scheitelwand (131b) hat, die an einen Endabschnitt der Innenumfangswand (131a) an ihrer Zentrifugalseite angrenzt und die sich in einer Zentrifugalrichtung von dem Endabschnitt erstreckt, und eine Außenumfangswand (131c) hat, die an einen Endabschnitt der Scheitelwand (131b) an der Zentrifugalseite angrenzt und die sich von dem Endabschnitt der Scheitelwand (131b) im Wesentlichen zu einer Ebene hin erstreckt, die senkrecht zu der Längsachse ist und die den Basisendabschnitt (11b) des ersten Kupplungsabschnittes (11) aufweist, und
wobei die Dicke der Innenumfangswand (131a) und der Scheitelwand (131b) so festgelegt sind, dass sie geringfügig kleiner als die Dicke der Außenumfangswand (131c) sind,
wobei der Verbindungskörper (13) aus dem Ausbauchungsabschnitt (131) und aus einem Verbindungsabschnitt (132) mit einem in L-Form ausgebildeten Längsabschnitt ausgebildet ist, der einen Endabschnitt des Ausbauchungsabschnittes (131) an seiner Außenumfangsseite mit dem Basisendabschnitt (12b) des zweiten Kupplungsabschnittes (12) verbindet, und
wobei ein anliegender Abschnitt (121), der in einer Zentripetalrichtung vorragt und der dazu vorgesehen ist, dass er an einem Endstückabschnitt des zweiten Kanals (31) anliegt, an dem Basisendabschnitt (12b) des zweiten Kupplungsabschnittes (12) vorgesehen ist.

2. Kanalverbindungselement gemäß Anspruch 1, wobei
ein ringförmiges Element (14), das dazu in der Lage ist, sich durch eine elastische Verformung zu erweitern und sich zusammenzuziehen, an einer Außenumfangsfläche des ersten Kupplungsabschnittes (11) vorgesehen ist.

3. Kanalverbindungsstruktur, die das Kanalverbindungselement gemäß Anspruch 1 oder 2 verwendet,
**dadurch gekennzeichnet, dass**
der erste Kupplungsabschnitt (11) an der Außenumfangsfläche des Öffnungsendes des ersten Kanals (21) sitzt, und der zweite Kupplungsabschnitt (12) an der Außenumfangsfläche des Öffnungsendes des zweiten Kanals (31) sitzt, wobei
der erste Kanal (21) ein Auslass einer Luftreinigungseinrichtung ist, und der zweite Kanal (31) ein Gehäuse einer Drossel ist.

## Revendications

1. Elément de raccordement de conduits pour véhicules formé d'un élément élastique pour raccorder des extrémités d'ouvertures respectives d'un premier conduit (21) et d'un deuxième conduit (31), comprenant :
une première partie d'accouplement tubulaire (11) qui est destinée à s'ajuster à une surface périphérique externe de ladite extrémité d'ouverture dudit premier conduit (21) ; une deuxième partie d'accouplement tubulaire (12) qui est destinée à s'ajuster à une surface périphérique externe de ladite extrémité d'ouverture dudit deuxième conduit (31) et qui est positionnée à une distance de direction axiale prédéterminée (L2) de séparation de ladite première partie d'accouplement (11) ; et un corps de raccordement (13) qui raccorde des parties d'extrémités de base respectives (11b, 12b) desdites première et deuxième parties d'accouplement (11, 12), et qui a une forme annulaire autour de l'axe longitudinal de l'élément de raccordement par conduit, cette forme annulaire gonflant vers l'extérieur dans une direction centrifuge, lesdites parties d'extrémités de base (11b, 12b) étant à des côtés avoisinantes desdites première et deuxième parties d'accouplement (11, 12) ; et
ledit corps de raccordement (13) a une partie bombée (131), qui comporte une paroi périphérique interne (131a) qui est contigüe à ladite partie d'extrémité de base (11b) de ladite première partie d'accouplement (11) et qui s'étend dans une direction centrifuge de ladite partie d'extrémité de base (11b) essentiellement vers un plan orthogonal à l'axe longitudinal contenant la partie de pointe (11a) de ladite partie d'accouplement (11) de sorte que le diamètre de la paroi périphérique interne augmente, une paroi de crête (131b) qui est contigüe à une partie d'extrémité de ladite paroi périphérique interne (131a) à son côté centrifuge et qui s'étend dans une direction centrifuge partant de ladite partie d'extrémité, et une paroi périphérique externe (131c) qui est contigüe à une partie d'extrémité de ladite paroi de crête (131b) au côté centrifuge et qui s'étend de ladite partie d'extrémité de ladite paroi de crête (131b) essentiellement vers un plan orthogonal à l'axe longitudinal contenant ladite partie d'extrémité de base (11b) de ladite première partie d'accouplement (11), et
où une épaisseur de ladite paroi périphérique interne (131a) et de ladite paroi de crête (131b) sont établies pour être légèrement inférieures à une épaisseur de ladite paroi périphérique externe (131c),
où ledit corps de raccordement (13) est formé de ladite partie bombée (131) et d'une partie de raccordement (132) avec une section longitudinale en forme de L qui raccorde une partie d'extrémité de ladite partie bombée (131) à son côté périphérique externe, à ladite partie d'extrémité de base (12b) de ladite deuxième partie d'accouplement (12), et
où une partie en butée (121) qui fait saillie dans une direction centripète et qui est destinée à s'abouter avec une partie de pointe dudit deuxième conduit (31) est prévue au niveau de ladite partie d'extrémité de base (12b) de ladite deuxième partie d'accouplement (12).

2. Elément de raccordement pour conduits selon la revendication 1, dans lequel un élément de forme annulaire (14) capable de se dilater et de se contracter par une déformation élastique est prévu à une surface périphérique externe de ladite première partie d'accouplement (11).

3. Structure de raccordement de conduits utilisant ledit élément de raccordement pour conduits selon la revendication 1 ou 2,
**caractérisée en ce que**
ladite première partie d'accouplement (11) est ajustée à ladite surface périphérique externe de ladite extrémité d'ouverture dudit premier conduit (21), et ladite deuxième partie d'accouplement (12) est ajustée à ladite surface périphérique externe de ladite extrémité d'ouverture dudit deuxième conduit (31), où
ledit premier conduit (21) est une sortie d'un filtre à air, et ledit deuxième conduit (31) est un boîtier d'un papillon des gaz.
